# EUROPEAN PATENT SPECIFICATION

(11) **EP 4 362 520 B1**
(45) Date of publication and mention of the grant of the patent: **25.03.2026**
(21) Application number: 22203176.7
(22) Date of filing: 24.10.2022
(51) Int. Cl.: H04W 12/37, H04W 12/12, H04W 12/30, H04W 12/126, H04L 9/40, G06Q 20/32

(54) **METHODS FOR RECOVERING A DEVICE, APP AND SYSTEM INCLUDING THE DEVICE**
VERFAHREN ZUR WIEDERHERSTELLUNG EINER VORRICHTUNG, APP UND SYSTEM MIT DER VORRICHTUNG
PROCÉDÉS DE RÉCUPÉRATION D'UN DISPOSITIF, APPLICATION ET SYSTÈME COMPRENANT LE DISPOSITIF

(43) Date of publication of application: 01.05.2024
(73) Proprietor: ASSA ABLOY AB, 107 23 Stockholm (SE)
(72) Inventor: WATTLES, Caleb, 75007 Paris (FR); POWELL, Marc Raymond, 95016 Paris (FR); BLACHARSKI-SUTREN, Barbara, 92420 Vaucresson (FR); DARZA, Hamza, 75020 Paris (FR); BEN KHALIFA, Houssem, 92000 Nanterre (FR)
(74) Representative: DTS Patent- und Rechtsanwälte PartmbB

(56) References cited:
- US-A1- 2014 282 961
- US-A1- 2015 235 017
- US-B1- 10 868 672

## Description

The present application describes a method for recovering a user's device. Such a device may be a mobile device e.g. a mobile phone or tablet but is not limited thereto.

Mobile devices are usually assigned to a specific user. On such mobile devices, specific information, such as online banking keys and/or other signature keys and/or authentication credentials may be stored. However, if a device is lost, it is often time consuming to re-setup the device so that it works with the respective originally stored credentials.

In the prior art techniques known so far, often, there is the prior need to call the bank where the user has his account, or it is required to send additional physical letters to provide the user with new initiation codes.

Relevant prior art is described in US 2015/235017 A1, US 2014/282961 A1, US 10 868 672 B1.

Generally, such Apps stored on the devices are from organizations with heterogeneous end users and there is no centralized device management. Examples for such a situation are Consumer Authentication, Banks, Brokerages, Exchanges, or the like.

As further variant where the respective devices or Apps can be implemented, there are also organizations with homogenous end users and a centralized device management. Such organizations in jurisdictions have privacy regulations deterring adoption of biometric authentication. Examples are Workforce Authentication, Enterprises, Firms, or the like.

However, in either one of these organizations, it's always a problem to easily recover a respective device or set up a new device for a specific user. All solutions which are known until now have certain drawbacks. Some or all of these drawbacks are solved by the methods and systems provided in the present invention.

On the one hand, the invention provides a method (an example is described in the following as method 1) and system for an environment wherein there is no centralized device management (e.g. for Consumer Authentication, Banks, Brokerages, Exchanges ). On the other hand, the invention provides a method (an example is described in the following as method 2) for an environment wherein there is a centralized device management (e.g. such as Workforce Authentication, Enterprises, Firms).

The method 1 is defined in claim 1. The method 2 is defined in claim 8. Claims 6, 7, 12 and 13 define corresponding apps and systems. Further preferred embodiments are defined in the dependent claims. In the following there are described this methods and variants thereof, however the scope of protection is defined by the claims. So some of the variants described in the following are helpful for understanding the present invention.

### METHOD 1:

Covering a first aspect (which is defined in claim 1), a device recovery method is provided herewith. The method comprises the following steps.

A recovery code is acquired with the device to be recovered (step a) in claim 1). Such a recovery code might be sent to the Device to be recovered via SMS, MMS, may be downloaded from a remote server, or may also be received via a physical letter. However, said examples are not limiting the invention. The recovery code may also be scanned directly from a display of a PC. After the recovery code is acquired, there is a matching verification (step b) in claim 1) between an inherence factor of the user recovering the device, and an inherence factor of the user, which is assigned, to the device.

The terminology "inherence factor" is commonly used in the technical field of authentication methods. Generally, the three most common categories for authentication are described as "something you know" or the knowledge factor, "something you have" or the possession factor and "something you are" or the inherence factor. That means an inherence factor is a factor about an information concerning something you are.

The recovery of the device is allowed (step c) in claim 1) if the inherence factor of the user recovering the device and the inherence factor of the user who is assigned to the device sufficiently match.

Generally, the matching is checked by connecting the device to be recovered, for example via mobile network (GPRS, 5G, LTE or the like) or WLAN to an authentication server, which may be implemented in a higher level system. If the inherence factor of the user, which recovers the device, matches with an inherence factor of the user to which the device is assigned, the recovering is allowed.

According to the invention as defined in claim 1, the authentication information is stored on the device to be recovered. For example, when setting up the device the first time and assigning it to a user, there may be an instruction from the App stored on the device to acquire an inherence factor of the user, which shall be assigned to the device. The inherence factor may be stored on the device. This factor may be used in the matching when the device is recovered.

With such a configuration, easy recovery of a system, wherein there is no centralized device management, can be provided.

To develop this solution even further, a preferred option is to include in the above method a step to declare the lost device, where the loss of the device to be recovered is reported to a higher level system. This means that, if a device is lost, this may be reported by a user of the device (or another person such as a helpdesk administrator) to a higher level system. Such a report may also be automatically sent from the device; if e.g. a software on the device assumes that the device is lost, (e.g. several times the wrong pin code is used to unlock the device). The higher level system may then generate a recovery code, which is later used in the step of acquiring the recovery code with the device to be recovered. The higher level system may be a system operated by an organization with which the user has a relation as a customer, e.g. may be an Organization, which requires Consumer Authentication, e.g. a Bank, a Broker, an Exchange.

Thus, it is beneficial to have a configuration provided where the respective user of the device may notify, for example, the provider of the App, or the respective manager of the device, that the device is lost.

The recovery code generated by the higher level system may be a scannable code such as a bar code, a QR code or the like and can be later scanned with the device when, for example, it is found and should be recovered. The recovery code is not necessarily a scannable code; it can also be an identification number or any other code. However, a scannable code, in particular a QR code or barcode, is preferable.

After the respective code is scanned with the device to be recovered, there can be, for example, a connection established between the device to be recovered and an authentication server, on which inherence factor of the user of the device is stored. Now, a matching verification is executed between the inherence factor of the user recovering the device and the inherence factor of the user who is assigned to the device. If this inherence factor matches or sufficiently matches (that means is above a preset threshold), the recovery of the device is allowed.

The inherence factor may comprise a factor for face recognition. That means, the user who wishes to recover the devices makes a photo of himself or switches on the camera of the device, and the respective photo or a video sequence will be transferred to the authentication server and the matching is executed.

This one inherence factor (e.g. face recognition) may be the only inherence factor, but it may also be required for recovery to use a combination of further inherence factors or a different multi-factor authentication. For instance, it is beneficial that additionally to the face recognition, a further inherence factor, such as live detection, is used. For example, when additionally to the face recognition, the live detection is executed as second inherence factor, the verification process may be executed two times, once for each factor. In case live detection is not available, alternative methods such as eyes gazing can be used.

Optionally the user may also use additional 'something you know' variable such as a physical signature to further enhance the security process.

Different inherence factors can be used either additionally or alternatively. For example, additionally to the first inherence factor, a second, or a third inherence factor (for example a knowledge factor, or a possession factor), can be used to execute additional matchings to allow the recovery of the device. Therefore, there may be provided at least a multi-factor authorization and that means, there is additionally to matching the inherence factor or factors, a further factor matched to allow the recovery of the system.

The inventive method may be executed via an App stored on the device. The App may be opened on the device and with the App, the respective recovery code may be scanned. Thereafter, there are provided on the App e.g. instructions to acquire an inherence factor (e.g. to take a photo) and then, the inherence factor is matched. This provision of the App provides an increased facilitation of the recovery handling. This functionality in the App may be only a part of the App. The App itself may also provide different functionalities, as banking functionality or provide a secure connection to a remote server or the like.

For enrollment of the App, it may be the case that the App is downloaded first, and then both, the device on which the App is running and the user are registered on an authentication server, this can be done along with the acquisition of an inherence factor of the user who is assigned to the device.

The acquired inherence factor of the user who is assigned to the device in the registration process of the device may be stored in the authentication server and then later used in the step of matching the inherence factor of the user recovering the device with the inherence factor who is assigned to the device.

In particular, it may be the case that after the App is downloaded and one opens the App, there is requested to input an inherence factor, for example, it may be taken a photo of the user, for example also 3D photo and this is then sent to the authentication server.

Further to the aforementioned method, it is also provided in accordance with the present invention an App that can be stored on the device. The App may constrain the instructions for carrying out the aforementioned inventive method.

As well, it is also provided a system comprising the device and an authentication server, with which the device can communicate and the App stored on the device. In the App stored on the device, the respective method, which was described in the preceding statements is to be executed.

### METHOD 2:

Covering a second aspect of the invention, another device recovery method is provided herewith. The method comprises the steps of connecting the device to be recovered to a Cloud storage in which a backup of the device is stored, and requesting a knowledge factor from a user recovering the device. The recovery of the device is allowed when the knowledge factor is correctly input to the device to be recovered.

This variant has a strong benefit if there is a centralized device management provided. Such organizations in jurisdictions have privacy regulations deterring adoption of biometric authentication. Examples are Workforce Authentication, Enterprises, Firms, or the like.

Namely, the steps of this method may be one or more of the following:
The user's respective device is commonly backed up on a Cloud server, for example of the company.

If the respective device is lost or a new device is registered, there is established a connection to the Cloud server (step i) in claim 12).

If the knowledge factor provided by the user during that connection (step ii) in claim 12) matches the knowledge factor which was given beforehand by the user to which the device is assigned, then a recovery is made (step iii) in claim 12) (meaning that integration in the system is allowed).

Generally, the three most common categories for authentication are described as "something you know" or the knowledge factor, "something you have" (ie: Pin code) or the possession factor, and "something you are" or the inherence factor. The possession factor represents something specific in their possession in order to log in such as a batch or a token or a key or SIM card.

It is for example controlled whether the correct knowledge factor is used by comparing the knowledge factor, which is input in the device with a knowledge factor stored in the backup of the device on the Cloud storage.

The knowledge factor may be a Pin code.

According to a further development, when the device is for the first time registered to be backed up in the Cloud storage, the user sets the specific knowledge factor, which identifies him to be assigned to the device. In particular, the data of the device that is backed up in the Cloud may include all the data of the Apps excluding the private signature keys which for security reasons never leave the App, (i.e., if there are banking Apps or other Apps which use a sensitive (private) credential data or (private) signature keys of the user of the device , the backup may consist in backing up of an intermediate key (called session or backup key)). However, when later registering the device to the Cloud, or when a recovery of the device is to be executed, then it is necessary to input the knowledge factor which will allow to retrieve the intermediate key required and then access a centralized resource (ie: the server) for the recovery of private keys.

Further to the aforementioned method (method 2), an application is also provided, which contains instructions carrying out one or more or all of the aforementioned method steps.

Furthermore, there is a system provided comprising a device in the Cloud storage, wherein the device has an App with which the inventive method can be carried out.

In the following, the aspects of the invention are described with respect to the Figure, in which shows
Figs. 1 and 2 a variant of a system in which an inherence factor is used for the system recovering and
Figs. 3 and 4 a variant of the system in which in knowledge factor is used, wherein the device communicates with a Cloud storage.

Although in the following, there are given two specific examples (examples for the above described method 1 and 2 respectively), the respective two specific examples are not delimiting the present invention. The present invention then should be understood in the broadest sense and is defined by the claims.

Although as a specific function for an inherence factor, the face recognition is used in the first embodiment and although for a specific example of the knowledge factor, a Pin code is used in the second embodiment, these features are not delimiting the invention.

On the same device, there can also be provided for respective recovery the both methods which are described in the foregoing. There may be used one single App for carrying out said methods, or two different Apps.

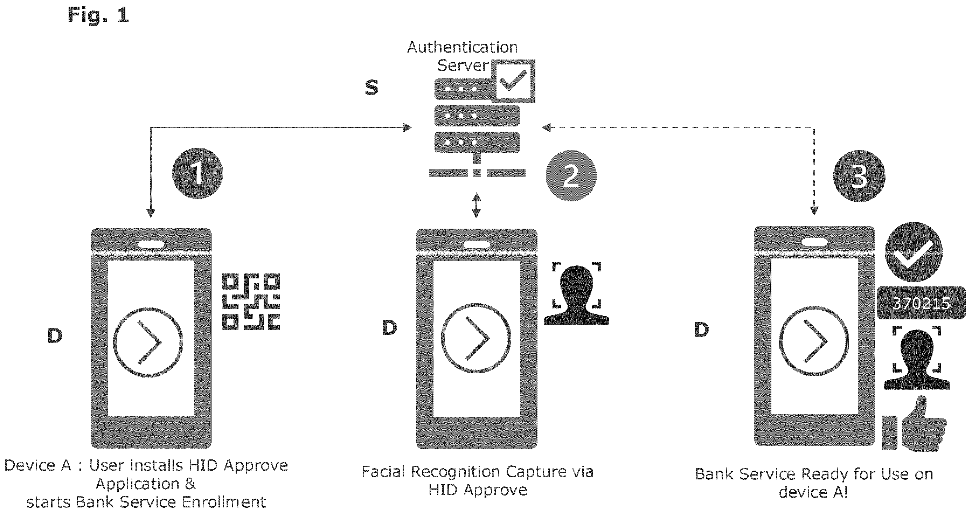

In **Fig. 1****,** there is schematically shown a mobile device identified with reference sign D. An authentication server with which the mobile device D can communicate is schematically shown with reference S. On the device D an Application can be installed, this application can be used to provide a service for a specific user (e.g. private signature keys for Banking or other credentials of the user).

In the specific embodiment shown in **Fig. 1****,** an App called HID Approve, which is an example for an App, is used to enroll a service on the user's device "A". The Letter "A" is given to the user's device for differentiating it from another user's device, which may be identified as user's device "B", or the like. Also the terminology first, second, third user's device may be used it show the different devices.

Namely in **Fig. 1** the device is assigned to user.

In **step 1** (the number 1 in Fig. 1 identifies step 1), for example, the App is downloaded to the device and installed, and a service starts to be enrolled by the application. Then in **step 2** (the number 2 in Fig. 1 identifies step 2), as it is schematically shown, there is executed a facial recognition via the App during the enrollment of the service on device A.

That means, after the App is started, when the user starts to enroll his device (e.g. by scanning a QR code or other methods provided by the App) ***(step* 1),** the App ask the user to take a photo or a video sequence with the camera of the device ***(step 2).*** This facial capture is an example for acquiring the inherence factor of the user, which shall be assigned to the device. Said inherence factor is communicated to the authentication server and saved thereon (also in **step 2**).

The facial recognition is one example of a so-called inherence factor. The inherence factor of the user assigned to the device can also be stored on the device itself, e.g. in the App as the authentication server allows the App to do so (also in **step 2** which covers the storage of the factor).

Although a face recognition is shown in **Fig. 1****,** other inherence factors may be used such as retina or iris scan finger print scan etc...

After assigning the device to the user (e.g. the device which is given the number 370215, currently corresponding to device "A") it is ready for use for the specific user ***(step 3)*** (the number 3 in Fig. 1 identifies step 3), thus the device has been successfully assigned to the user and the user's inherence factor has been stored in the process.

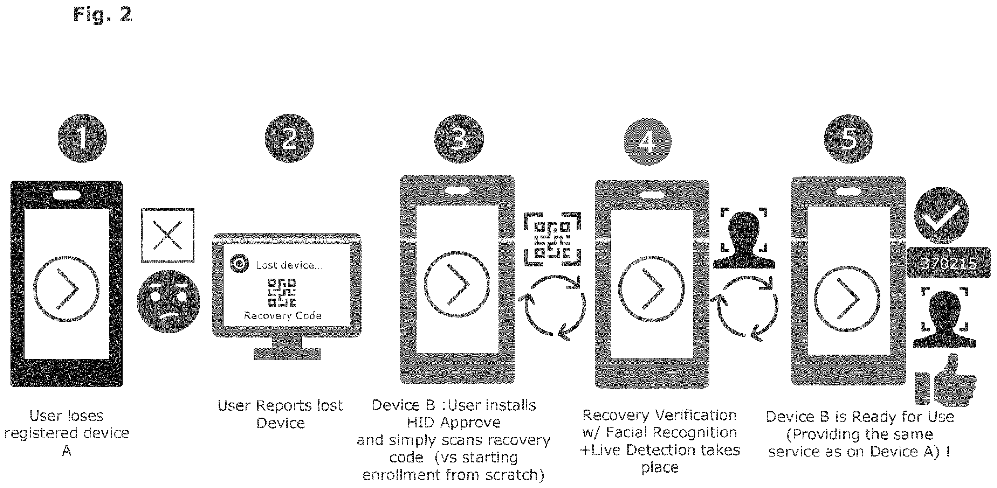

In **Fig. 2****, *(steps* 1 & 2)** (the number 1 and 2 in **Fig. 2** identifies step 1 and 2, the step numbers in said relation are just given for identification purposes, they may or may not correspond to the step numeration in **Fig. 1****)** it is shown a sketch where the device A is lost and the user assigned to the device declares the lost device. Thus, **Fig. 2** shows the situation of recovering the App one the same device after it was lost and is found again, or on a new device, if the original device is not found.

Thereafter, after the device loss is reported, for example to a higher level system, a so-called recovery code is generated. In this specific case, the recovery code is a QR code, however, any other code may be used, also a number digit code may be provided. This code can be for example sent via email to an email address of the user. This code may also just visible on a Display of a PC.

Now, in order to recover the device data (on the same device A if it is found again, or on a new device, e.g. device B as it is shown in **Fig. 2****,** if it's a permanent loss), when the recovery code is scanned with the device to be recovered, for example device B ***(step 3*)** (the number 3 in **Fig. 2** identifies step 3), a matching of an inherence factor of the user recovering the device with an inherence factor of the user which is assigned to the device is executed ***(step 4)*** (the number 4 in **Fig. 2** identifies step 4).

The recovery of the device A on device B (or also on the device A if it is found again) is allowed, if the inherence factor of the user recovering the device and the inherence factor of the user who is assigned to the device sufficiently matches (e.g. The user's face matches the user's facial data stored on the server) ***(step 5)*** (the number 5 in **Fig. 2** identifies step 5).

Generally, the matching is checked by connecting the device to be recovered, for example via mobile network (GPRS, 5G, LTE or the like) or WLAN to an authentication server, which may be implemented in a higher level system. If the inherence factor of the user, which recovers the device, matches with an inherence factor of the user to which the device is assigned, the recovering is allowed.

According to the invention as defined in claim 1, the authentication information as it is shown in **Fig. 2** is stored on the device to be recovered. For Example when setting up the device the first time and assigning it to a user, user may be instructed by the App stored on the device to acquire an inherence factor for the user, which shall be assigned to the device. So the inherence factor may be stored on the device. This factor may be used in the matching when the device is recovered (e.g. device is found again). Note that even if a user has gotten a hold of the device (e.g., a different user finds device), the user will not be able to recover the device user specific data using the recovery code unless the inherence factor stored on the device matches with the inherence factor user provides during recovery.

With such a configuration, easy recovering of a system, wherein there is no centralized device management can be provided.

In the present case, additional to the facial recognition, there is an extra inherence factor necessary. Said inherence factor is a so called live detection (LD). For example, when additionally to the face recognition the live detection is executed as second inherence factor, matching process is executed twice. The data for the matching may be stored on the device e.g. in the App or in the authentication server. In case live detection is not available, alternative methods such as eyes gazing can be used.

Optionally the user may also use additional 'something you know' variable such as a physical signature to further enhance the security process.

Additionally (or alternatively), these different inherence factors can be used in combination with the initial inherence factor. For example, to allow full device recovery, a knowledge factor or a possession factor verification can be used subsequently to the initial inherence factor matching operation. Therefore, the solution provides multi-factor authorizations, as in addition to matching the inherence factor or factors, a further factor can be matched to allow the recovery of the system.

It has been shown in the first example that via an App, respective mobile device can be recovered and again used after it is for example lost and blocked by the information that the system is lost. The user setting and/or credentials in the App can also be recovered on a different device (e.g. device B) if the original device A is not found. In order to do so, the App may be installed on the device B and the matching of the inherence factors and subsequent recovery, now of device B is executed.

Thus, the device to be recovered may be a different one from the device, which is lost. In this case the recovered device has in view of the lost device after the recovering the same functions, which namely are recovered. This may include only one specific function of the App or all functions of the device.

The system shown in **Figs. 1** **and** **2** is beneficial for heterogeneous end user deployments where no central device management is used.

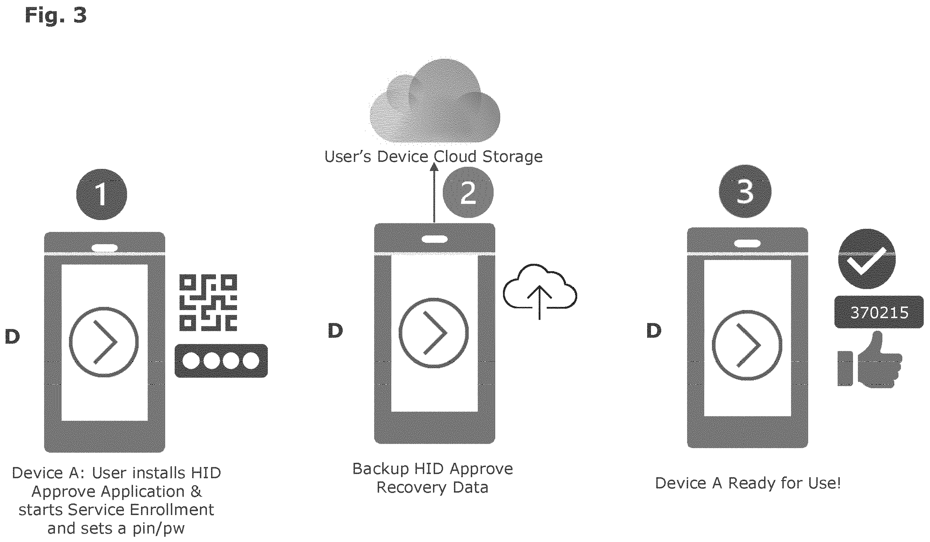

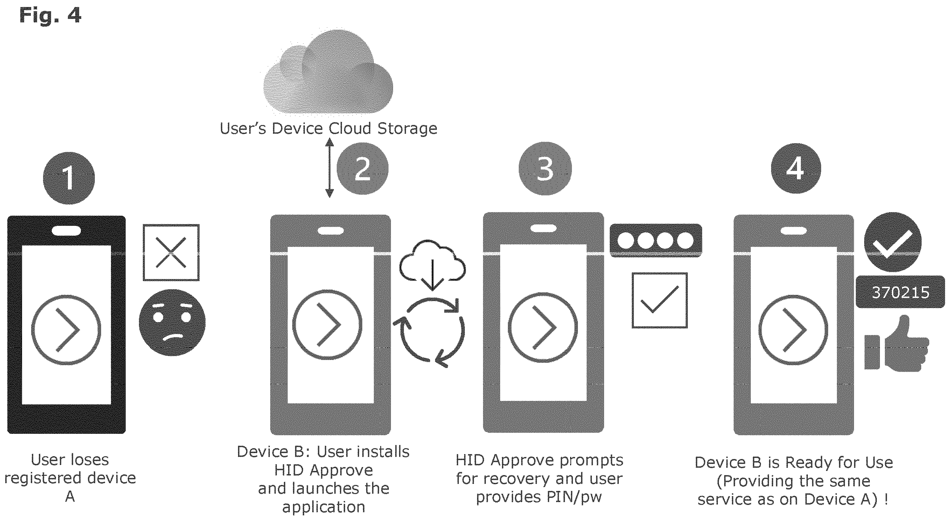

In **Figs. 3** **and** **4****,** the variant is beneficial for organizations with homogeneous end user deployments where a centralized device management is used. Herein the situation in **Fig. 3** is similar to the situation in **Fig. 1** for the above-described method, and the situation in **Fig. 4** is similar to the situation in **Fig. 2** for the above-described method.

In **Fig. 3****,** it is generally shown that after downloading and installing the HID approve App (as an example of an App), user's device A can be activated via a QR code *(in HID Approve App scanning an activation QR code will trigger the creation of user specific signature keys on the device, which will be used for e.g. Banking services)* and additionally the user can define a pin value to protect his data *(Such* as *the signature keys for instance) **(step 1)*** (the number 1 in **Fig. 3** identifies step 1, the step numbers in said relation are just given for identification purposes, they may or may not correspond to the step numeration in **Fig. 1** and/or **Fig. 2****).** Thereafter, once the user's device A is enrolled, the device A is allowed to connect to user's device Cloud storage where the Apps and data of the device are stored ***(step 2) )*** (the number 2 in **Fig. 3** identifies step 2). This may be a storage Cloud in a company or enterprise. Then, after the respective data backup is setup, the device A can be used ***(step 3)*** (the number 3 in **Fig. 3** identifies step 3). However, private signature keys and or other private credentials are not backed-up. Instead only an intermediate key (called session or backup key) is stored in the cloud.

According to the invention as defined in claim 8, the App does not back up the user's private credential data or private signature keys themselves as they are sensitive data, it is backup an intermediate key form the device which is the aforementioned 'session' or 'backup key', that key, once it is recovered, will allow the private keys to be restored on the device.

When the user wants to recover his/her device the backup key is used to authenticate to the Authentication Server and is used to initiate the renewal of his transaction signing keys on the recovered device. The benefit of that approach is that the non repudiation property is preserved as the signing keys never left the device in the first place.

In the case of HID approve this is very problematic because the keychain contains signature keys. If the signature keys are leaked or stolen after being backed up in the cloud the non-repudiation property of transaction signing is lost. Indeed the user can claim he may not have sign a given transactions as the keys were leaked or stolen.

If the device A is lost as e.g. shown in **Fig. 4** ***(step* 1)** (the number 1 in **Fig. 4** identifies step 1), and the user has installed HID Approve App on device B ***(step 2)*** (the number 2 in **Fig. 4** identifies step 2), then when the user launches the HID approve App, it automatically prompts the user to connect to the device Cloud storage ***(step 3)*** (the number 3 in **Fig. 3** identifies step 3).

If this is done for the first time, as for example the device A is lost, or a new device B is assigned, the respective Pin code is asked by the App ***(step 3) .*** If the Pin code is the correct Pin code, which was set by the user during the enrollment, the respective device (e. g. Device B) is registered and can be connected to the backup to restore the data from Device A (In the present case the intermediary key is restored which allows the recovery of the private credential data or private signature keys) ***(step 3).***

The Pin code is an example of a knowledge factor. However, as already outlined above also different other authentication factors or combinations thereof may be used.

This functionality provides a further variant of registering or recovering a device.

The respective HID App in the specific description is an example of such App. This App may include further to the recovery and initialization features, features concerning secure connection, for example to mobile banking or any transaction. Thus, there may be contained in the App security key or other credentials.

### Reference sign list

- D: device
- S: authentication server

## Claims

1. A method for recovering data associated with loss of a device (D), wherein the method comprises the steps of:
a) acquiring a recovery code associated with the device (D), wherein the recovery code is acquired by scanning, using a second device, a scannable code generated after reporting the loss of the device (D),
b) matching an inherence factor of a user recovering the data associated with the device (D) with an inherence factor of a user which is assigned to the device (D), wherein the inherence factor comprises a combination of facial recognition and live detection,
c) allowing a recovery of the data associated with the device (D) if the inherence factor of the user recovering the data associated with the device and the inherence factor of the user which is assigned to the device sufficiently match, and
d) wherein the inherence factor of the user recovering the data is stored locally on the second device, and the matching is performed locally on the second device, thereby enhancing privacy by reducing the need to share biometric data with external systems.

2. The method according to claim 1, wherein the method further comprises the step of reporting a loss of the device (D) to be recovered to a higher level system.

3. The method according to claim 1 or 2, wherein after reporting the loss of the device (D) to be recovered to the higher level system, said higher level system generates the recovery code used in step a).

4. The method according to any of claims 1 to 3, wherein the method is executed with an App stored on the device (D).

5. The method according to claim 4, wherein for enrollment of the App the App is downloaded and registered at an authentication server assigning the device on which the App is running to the user.

6. An App which can be stored on a device, which App contains instructions for carrying out the method of any of the foregoing claims.

7. A System comprising a device (D), an authentication server with which the device (D) can communicate, and an App stored on the device (D) which is adapted to carry out the method of any of the claims 1 to 5.

8. A method for recovering data associated with a device (D) wherein the method comprises the steps of:
i) connecting a second device to a cloud storage in which a backup of the device (D) is stored,
ii) requesting a knowledge factor from the user recovering the data associated with the device (D), wherein the knowledge factor is a passcode set during an initial device setup of the device (D), and
iii) allowing a recovery of the data associated with the device (D) if the knowledge factor is correctly input into the second device, wherein the backup includes an intermediate key for backing up sensitive data without providing any transaction signing keys of the device (D) to the cloud storage, and wherein the intermediate key is used, by the second device, to authenticate to an Authentication Server and initiate the renewal of the transaction signing keys of the device (D) on the second device, thereby preserving a non-repudiation property of transaction signing.

9. The method according to claim 8, wherein it is controlled whether the knowledge factor is correctly inputted by comparing the knowledge factor inputted with a knowledge factor stored in the backup of the device (D) on the cloud storage.

10. The method according to any of claims 8 and 9,wherein when the device (D) is for the first time registered to be backed up in the cloud storage a user sets the knowledge factor.

11. The method according to any of claims 8 to 10, wherein the data of the device which are backed up includes App data of an App containing one or more signature keys, wherein the one or signature keys are not backed up and instead an intermediate key is backed up, which allows a restoration of the one or signature keys after backing up the device.

12. An App which can be stored on a device, which App contains instructions for carrying out the method of any of claims 8 to 11.

13. A System comprising a device (D), a cloud storage in which a backup of the device (D) is stored, and an App stored on the device (D) which is adapted to carry out the method of any of the claims 8 to 11.

## Patentansprüche

1. Verfahren zur Wiederherstellung von Daten in Zusammenhang mit dem Verlust einer Vorrichtung (D), wobei das Verfahren die Schritte umfasst:
a) Erlangen eines Wiederherstellungscodes, welcher der Vorrichtung (D) zugeordnet ist, wobei der Wiederherstellungscode durch Scannen, unter Verwendung einer zweiten Vorrichtung, eines scanbaren Codes erlangt wird, der nach der Meldung des Verlustes der Vorrichtung (D) erzeugt wird,
b) Abgleichen eines Inhärenzfaktors eines Benutzers, der die der Vorrichtung (D) zugeordneten Daten wiederherstellt, mit einem Inhärenzfaktor eines Benutzers, welcher der Vorrichtung (D) zugeordnet ist, wobei der Inhärenzfaktor eine Kombination aus einer Gesichtserkennung und Live-Erfassung aufweist,
c) Ermöglichen einer Wiederherstellung der der Vorrichtung (D) zugeordneten Daten, wenn der Inhärenzfaktor des Benutzers, der die der Vorrichtung zugeordneten Daten wiederherstellt, und der Inhärenzfaktor des Benutzers, welcher der Vorrichtung zugeordnet ist, ausreichend übereinstimmen, und
d) wobei der Inhärenzfaktor des Benutzers, der die Daten wiederherstellt, lokal auf der zweiten Vorrichtung gespeichert wird, und das Abgleichen lokal auf der zweiten Vorrichtung durchgeführt wird, wodurch die Privatsphäre verbessert wird, indem die Notwendigkeit, biometrische Daten mit externen Systemen zu teilen, reduziert wird.

2. Verfahren nach Anspruch 1, wobei das Verfahren darüber hinaus den Schritt umfasst, einen Verlust der wiederherzustellenden Vorrichtung (D) einem auf einer höheren Ebene befindlichen System zu melden.

3. Verfahren nach Anspruch 1 oder 2, wobei, nachdem der Verlust der wiederherzustellenden Vorrichtung (D) dem auf einer höheren Ebene befindlichen System gemeldet wurde, das auf einer höheren Ebene befindliche System den in Schritt a) verwendeten Wiederherstellungscode erzeugt.

4. Verfahren nach einem der Ansprüche 1 bis 3, wobei das Verfahren mit einer auf der Vorrichtung (D) gespeicherten App ausgeführt wird.

5. Verfahren nach Anspruch 4, wobei zur Registrierung der App diese heruntergeladen und auf einem Authentifizierungsserver registriert wird, der die Vorrichtung, auf der die App läuft, dem Benutzer zuweist.

6. App, die auf einer Vorrichtung gespeichert werden kann, wobei die App Anweisungen zur Ausführung des Verfahrens nach einem der vorhergehenden Ansprüche enthält.

7. System, aufweisend eine Vorrichtung (D), einen Authentifizierungsserver, mit dem die Vorrichtung (D) kommunizieren kann, und eine auf der Vorrichtung (D) gespeicherte App, die dafür angepasst ist, das Verfahren nach einem der Ansprüche 1 bis 5 auszuführen.

8. Verfahren zur Wiederherstellung von einer Vorrichtung (D) zugeordneten Daten, wobei das Verfahren die Schritte umfasst:
i) Verbinden einer zweiten Vorrichtung mit einem Cloud-Speicher, in dem ein Backup der Vorrichtung (D) gespeichert ist,
ii) Anfordern eines Wissensfaktors von dem Benutzer, der die der Vorrichtung (D) zugeordneten Daten wiederherstellt, wobei der Wissensfaktors ein Zugangscode ist, der während der anfänglichen Geräteinstallation der Vorrichtung (D) eingerichtet wird, und
iii) Ermöglichen einer Wiederherstellung der der Vorrichtung (D) zugeordneten Daten, wenn der Wissensfaktor in die zweite Vorrichtung richtig eingegeben wird, wobei das Backup einen Zwischenschlüssel zur Sicherung von sensitiven Daten umfasst, ohne dem Cloud-Speicher irgendwelche Transaktionssignierschlüssel der Vorrichtung (D) bereitzustellen, und wobei der Zwischenschlüssel von der zweiten Vorrichtung verwendet wird, um sich an einem Authentifizierungsserver zu authentifizieren und die Erneuerung der Transaktionssignierschlüssel der Vorrichtung (D) auf der zweiten Vorrichtung zu initiieren, wodurch eine Nichtablehnungseigenschaft der Transaktionssignierung erhalten bleibt.

9. Verfahren nach Anspruch 8, wobei kontrolliert wird, ob der Wissensfaktor richtig eingegeben ist, indem der eingegebene Wissensfaktor mit einem Wissensfaktor verglichen wird, der in dem Backup der Vorrichtung (D) auf dem Cloud-Speicher gespeichert ist.

10. Verfahren nach einem der Ansprüche 8 und 9, wobei ein Benutzer den Wissensfaktor einrichtet, wenn die Vorrichtung (D) zum ersten Mal registriert wird, um im Cloud-Speicher gesichert zu werden.

11. Verfahren nach einem der Ansprüche 8 bis 10, wobei die Daten der Vorrichtung, die gesichert werden, App-Daten einer App umfasst, die einen oder mehrere Signaturschlüssel enthält, wobei der eine oder die mehreren Signaturschlüssel nicht gesichert und stattdessen ein Zwischenschlüssel gesichert wird, der eine Wiederherstellung des einen oder der mehreren Signaturschlüssel nach dem Sichern der Vorrichtung ermöglicht.

12. App, die auf einer Vorrichtung gespeichert werden kann, wobei die App Anweisungen zur Ausführung des Verfahrens nach einem der Ansprüche 8 bis 11 enthält.

13. System, aufweisend eine Vorrichtung (D), einen Cloud-Speicher, in dem ein Backup der Vorrichtung (D) gespeichert ist, und eine auf der Vorrichtung (D) gespeicherte App, die dafür angepasst ist, das Verfahren nach einem der Ansprüche 8 bis 11 auszuführen.

## Revendications

1. Procédé destiné à récupérer des données associées à la perte d'un dispositif (D), dans lequel le procédé comprend les étapes destinées à :
a) acquérir un code de récupération associé au dispositif (D), le code de récupération étant acquis en numérisant par balayage, à l'aide d'un second dispositif, un code numérisable généré après avoir rapporté la perte du dispositif (D),
b) mettre en correspondance un facteur intrinsèque d'un utilisateur récupérant les données associées au dispositif (D) avec un facteur intrinsèque d'un utilisateur qui est attribué au dispositif (D), le facteur intrinsèque comprenant une combinaison de reconnaissance faciale et de détection en direct,
c) permettre une récupération des données associées au dispositif (D) si le facteur intrinsèque de l'utilisateur récupérant les données associées au dispositif et le facteur intrinsèque de l'utilisateur qui est attribué au dispositif correspondent suffisamment, et
d) dans lequel le facteur intrinsèque de l'utilisateur récupérant les données est stocké localement sur le second dispositif, et la mise en correspondance est réalisée localement sur le second dispositif, améliorant ainsi la vie privée en réduisant la nécessité de partager des données biométriques avec des systèmes externes.

2. Procédé selon la revendication 1, dans lequel le procédé comprend en outre l'étape destinée à rapporter à un système de niveau supérieur une perte du dispositif (D) à récupérer.

3. Procédé selon la revendication 1 ou 2, dans lequel, après avoir rapporté au système de niveau supérieur la perte du dispositif (D) à récupérer, ledit système de niveau supérieur génère le code de récupération utilisé à l'étape a).

4. Procédé selon l'une quelconque des revendications 1 à 3, dans lequel le procédé est exécuté avec une application (App) stockée sur le dispositif (D).

5. Procédé selon la revendication 4, dans lequel, pour l'inscription de l'application, l'application est téléchargée et enregistrée au niveau d'un service d'authentification attribuant à l'utilisateur le dispositif sur lequel l'application fonctionne.

6. Application (App) qui peut être stockée sur un dispositif, laquelle application contient des instructions pour mettre en œuvre le procédé selon l'une quelconque des revendications précédentes.

7. Système comprenant un dispositif (D), un serveur d'authentification avec lequel le dispositif (D) peut communiquer et une application stockée sur le dispositif (D) qui est adaptée à mettre en œuvre le procédé selon l'une quelconque des revendications 1 à 5.

8. Procédé destiné à récupérer des données associées à un dispositif (D), dans lequel le procédé comprend les étapes destinées à :
i) connecter un second dispositif à un stockage en nuage (cloud) dans lequel une sauvegarde du dispositif (D) est stockée,
ii) demander un facteur de connaissance en provenance de l'utilisateur récupérant les données associées au dispositif (D), le facteur de connaissance étant un code de déverrouillage défini pendant une configuration de dispositif initiale du dispositif (D), et
iii) permettre une récupération des données associées au dispositif (D) si le facteur de connaissance est entré correctement dans le second dispositif, dans lequel la sauvegarde comporte une clé intermédiaire pour sauvegarder des données sensibles sans fournir de clés de signature de transaction du dispositif (D) au stockage en nuage, et dans lequel la clé intermédiaire est utilisée, par le second dispositif, pour s'authentifier sur un serveur d'authentification et initier le renouvellement des clés de signature de transaction du dispositif (D) sur le second dispositif, préservant ainsi toute action de non-répudiation de la signature de transaction.

9. Procédé selon la revendication 8, dans lequel on vérifie si le facteur de connaissance est entré correctement en comparant le facteur de connaissance entré à un facteur de connaissance stocké dans la sauvegarde du dispositif (D) sur le stockage en nuage.

10. Procédé selon l'une quelconque des revendications 8 et 9, dans lequel lorsque le dispositif (D) est enregistré la première fois pour être sauvegardé dans le stockage en nuage un utilisateur définit le facteur de connaissance.

11. Procédé selon l'une quelconque des revendications 8 à 10, dans lequel les données du dispositif qui sont sauvegardées comportent des données d'application d'une application contenant une ou plusieurs clés de signature, la ou les clés de signature n'étant pas sauvegardées et, à la place, une clé intermédiaire est sauvegardée, ce qui permet une restauration de la ou des clés de signature après la sauvegarde du dispositif.

12. Application qui peut être stockée sur un dispositif, laquelle application contient des instructions pour mettre en œuvre le procédé selon l'une quelconque des revendications 8 à 11.

13. Système comprenant un dispositif (D), un stockage en nuage (cloud), dans lequel une sauvegarde du dispositif (D) est stockée, et une application stockée sur le dispositif (D) qui est adaptée à mettre en œuvre le procédé selon l'une quelconque des revendications 8 à 11.
